# EUROPÄISCHE PATENTANMELDUNG

(11) **EP 3 363 722 A1**
(43) Veröffentlichungstag der Anmeldung: **22.08.2018**
(21) Anmeldenummer: 17157109.4
(22) Anmeldetag: 21.02.2017
(51) Int. Cl.: B62J 11/00

(54) **HALTERUNGSANORDNUNG FÜR EINE KOMPONENTE AN EINEM FAHRZEUG**

(71) Anmelder: Brake Force One GmbH, 72074 Tübingen (DE)
(72) Erfinder: Lauhoff, Jakob, 72070 Tubingen (DE)
(74) Vertreter: Kohler Schmid Möbus Patentanwälte

(57) **Zusammenfassung**

Bei einer Halterungsanordnung (1) für eine Komponente (4) an einem Fahrzeug, insbesondere an einem Zweirad, mit einem an einem Fahrzeugteil (2) befestigbaren Halter (3), wobei die Komponente (4) ein Gehäuse (7) aufweist, in dem zumindest eine Befestigungsschraube (15, 16) angeordnet ist, weist das Gehäuse (7) eine Zugangsöffnung (8, 9) auf, deren Form und/oder Querschnitt von der und/oder dem des Werkzeugangriffendes (17, 18) der Befestigungsschraube (15, 16) abweicht, derart, dass das Werkzeugangriffende (17, 18) die Zugangsöffnung (8, 9) nicht passieren kann.

## Beschreibung

Die Erfindung betrifft eine Halterungsanordnung für eine Komponente an einem Fahrzeug, insbesondere an einem Zweirad, mit einem an einem Fahrzeugteil befestigbaren Halter.

Häufig ist es notwendig, Komponenten, wie beispielsweise einen Tacho ein Licht oder dergleichen an einem Fahrzeug, insbesondere an einem Zweirad, zu befestigen. Insbesondere kann es notwendig sein, eine Komponente an einem Rahmen oder einem Lenker eines Zweirads zu befestigen. Wenn die Komponente einen Sensor oder dergleichen aufweist, kann es besonders wichtig sein, dass die Lage der Komponente am Fahrzeug exakt festgelegt ist und wiederholgenau wieder eingenommen wird, sollte die Komponente, beispielsweise zu Wartungszwecken, entfernt werden. Außerdem sollte sichergestellt sein, dass ein Benutzer nicht selbstständig die Lage der Komponente am Fahrzeug ändern kann.

Aufgabe der vorliegenden Erfindung ist es daher, eine Halterungsanordnung für eine Komponente an einem Fahrzeug, insbesondere einem Zweirad, bereitzustellen, die die oben genannten Anforderungen erfüllt.

Gelöst wird diese Aufgabe durch eine Halterungsanordnung für eine Komponente an einem Fahrzeug, insbesondere an einem Zweirad, mit einem an einem Fahrzeugteil befestigbaren Halter, wobei die Komponente ein Gehäuse aufweist, in dem zumindest eine Befestigungsschraube angeordnet ist, wobei das Gehäuse eine Zugangsöffnung aufweist, deren Form und/oder Querschnitt von der und/oder dem des Werkzeugangriffendes der Befestigungsschraube abweicht, derart, dass das Werkzeugangriffende die Zugangsöffnung nicht passieren kann. Durch diese Maßnahme ist die Befestigungsschraube nicht nur nicht verlierbar, sondern auch nicht austauschbar an der Komponente, insbesondere im Gehäuse der Komponente, angeordnet. Ein Benutzer kann daher nicht selbstständig die Befestigungsschraube tauschen, um beispielsweise einen anderen Abstand der Komponente zum Halter einzustellen. Die Größe der Zugangsöffnung ist vorzugsweise so bemessen, dass ein Werkzeug durch die Zugangsöffnung eingeführt werden kann und zu dem Werkzeugangriffende der Schraube gelangen kann. Andererseits ist die Form und/oder der Querschnitt der Zugangsöffnung so gestaltet, dass ein Werkzeugangriffende der Befestigungsschraube, insbesondere ein Schraubenkopf, nicht durch die Zugangsöffnung passt.

Besonders bevorzugt ist es, wenn die Komponente eine Durchgangsöffnung aufweist, an der die Befestigungsschraube angeordnet ist, wobei die Befestigungsschraube mit ihrem Befestigungsende nicht über das Gehäuse nach außen übersteht. Somit kann ein Benutzer den Abstand zwischen Komponente und Halter nicht verändern, insbesondere nicht vergrößern. Außerdem ist die Befestigungsschraube vor Beschädigung geschützt, ehe die Komponente an dem Halter montiert wird.

Weitere Vorteile ergeben sich, wenn der Halter zumindest einen Gewindezapfen aufweist, der in das Gehäuse der Komponente ragt. Somit kann das Gehäuse auf den Gewindezapfen aufgesetzt werden. Die Position der Komponente relativ zum Halter wird dadurch bestimmt. Dadurch, dass der Gewindezapfen in den Halter ragt, kann eine besonders gute und zuverlässige Befestigung der Komponente am Halter erfolgen. Außerdem erlaubt dies, die Befestigungsschraube so kurz auszubilden, dass sie nicht über das Gehäuse übersteht.

Gemäß einer besonders vorteilhaften Ausführungsform kann vorgesehen sein, dass der Halter irreversibel an dem Fahrzeugteil befestigbar ist. Beispielsweise kann der Halter an das Fahrzeugteil geklebt sein. Unter einer irreversiblen Befestigung ist in diesem Zusammenhang eine Befestigung zu verstehen, die nicht zerstörungsfrei lösbar ist.

Insbesondere, wenn die Komponente einen Sensor, beispielsweise einen Beschleunigungssensor, aufweist, sollte die Komponente schwingungsgedämpft gelagert sein. Daher ist es vorteilhaft, wenn zwischen der Komponente und dem Halter zumindest ein Dämpfungselement vorgesehen ist. Das Dämpfungselement kann beispielsweise aus Gummi ausgebildet sein.

Beispielsweise kann zwischen einem Komponentenabschnitt und dem Gewindezapfen des Halters ein Dämpfungselement angeordnet sein. Bei dem Dämpfungselement kann es sich beispielweise um einen Gummiring handeln, den die Befestigungsschraube durchgreift. Somit kann das Dämpfungselement besonders einfach zwischen einem Komponentenabschnitt, nämlich einem Komponentenabschnitt, der von der Befestigungsschraube durchragt ist, und dem Gewindezapfen angeordnet werden. Weiterhin kann vorgesehen sein, dass zwischen dem Werkzeugangriffende und einem Komponentenabschnitt ein Dämpfungselement angeordnet ist. Somit wird die Komponente noch weiter von Schwingungen entkoppelt. Insbesondere kann das Werkzeugangriffende, beispielsweise ein Schraubenkopf, an einem Dämpfungselement, beispielsweise einem Gummiring, anliegen, der wiederum an den Komponentenabschnitt anliegt, der durch die Befestigungsschraube durchragt ist. Am unteren Ende des Komponentenabschnitts kann ein weiterer Gummiring vorgesehen sein, der dann auf dem Gewindezapfen aufliegt.

Besonders vorteilhaft ist es, wenn der Halter eine Durchgangsöffnung oder Aufnahme zur formschlüssigen Aufnahme eines Komponententeils aufweist. Somit kann an dieser Stelle eine werkzeuglose Befestigung erfolgen. Ein Teil der Komponente muss lediglich durch die Durchgangsöffnung bzw. muss in die Aufnahme gesteckt werden. Beispielsweise kann es sich bei dem Komponententeil um einen Hydraulikausgang handeln, der durch die Durchgangsöffnung des Halters gesteckt wird.

Im Bereich der Durchgangsöffnung kann ein Dämpfungselement angeordnet sein. Somit kann die Komponente auch an dieser Stelle vom Halter schwingungsmäßig entkoppelt werden. Beispielsweise kann das Dämpfungselement als Gummiring ausgebildet sein.

Die Durchgangsöffnung oder Aufnahme kann aufweitbar sein. Insbesondere kann sie gegen eine Rückstellkraft aufweitbar sein. Durch die Rückstellkraft kann ein Komponententeil in der Durchgangsöffnung oder Aufnahme eingeklemmt werden. Der Halterteil, in dem die Durchgangsöffnung oder Aufnahme vorgesehen ist, insbesondere ein Schenkel des Halters, kann aus elastischem Material ausgebildet sein. Die Durchgangsöffnung oder Aufnahme kann geschlitzt sein.

Die Komponente kann an zumindest zwei, vorzugsweise drei, Stellen mit dem Halter verbunden sein. Somit ergibt sich eine gute Verbindung der Komponente mit dem Halter. Außerdem kann die Lage der Komponente relativ zum Halter durch die zwei oder drei Verbindungsstellen exakt festgelegt werden. Sämtliche Verbindungsstellen können eine schwingungsgedämpfte Lagerung der Komponente am Halter reduzieren. Beispielsweise kann die Komponente mit dem Halter dadurch verbunden werden, dass die Komponente in eine Durchgangsöffnung des Halters eingesteckt wird und anschließend mit zwei Befestigungsschrauben, die in der Komponente angeordnet sind, am Halter befestigt wird.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

Es zeigen:
- Fig. 1: eine Seitenansicht einer Halterungsanordnung, welche an einem Fahrzeugteil montiert ist;
- Fig. 2: eine Draufsicht auf die Halterungsanordnung gemäß Fig. 1;
- Fig. 3: eine Schnittdarstellung gemäß der Linie III-III der Fig. 2;
- Fig. 4: eine Schnittdarstellung gemäß der Linie IV-IV der Fig. 2.

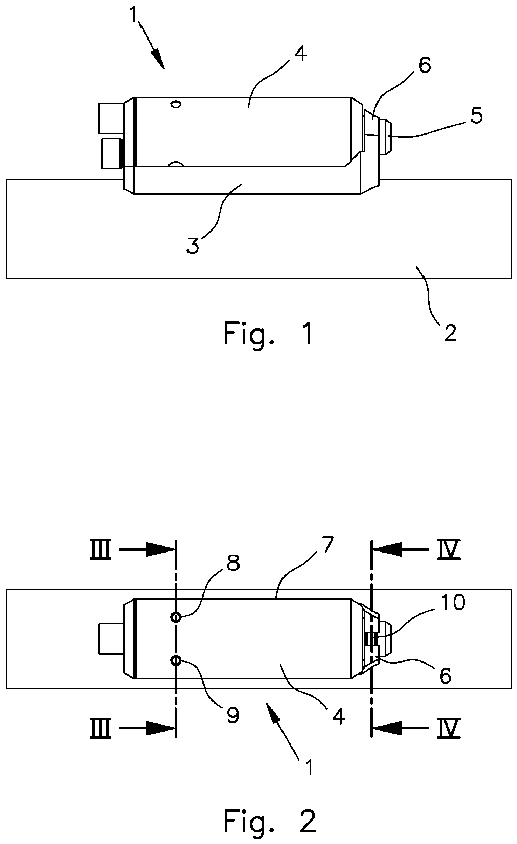

Die Fig. 1 zeigt eine Halterungsanordnung 1, welche an einem Fahrzeugteil 2, insbesondere einem rohrförmigen Fahrzeugteil eines Zweirads, montiert ist. Die Halterungsanordnung 1 umfasst einen Halter 3 und eine Komponente 4, die am Halter 3 befestigt ist. Die Komponente 4 umfasst einen Komponententeil 5, welcher eine geschlitzte Durchgangsöffnung des Halters 3 durchragt. Der Halter 3 ist im Wesentlichen L-förmig ausgestaltet, wobei die Durchgangsöffnung in dem nach oben stehenden Schenkel 6 ausgebildet ist.

Die Fig. 2 zeigt eine Draufsicht auf die Halterungsanordnung 1 gemäß der Fig. 1. Hier ist zu erkennen, dass das Gehäuse 7 der Komponente 4 Zugangsöffnungen 8, 9 aufweist, durch die ein Werkzeug eingesteckt werden kann. Weiterhin ist zu erkennen, dass der Schenkel 6 des Halters 3 einen Schlitz 10 aufweist. Somit kann die noch näher zu beschreibende Durchgangsöffnung beim Einführen des Komponententeils 5 etwas aufgeweitet werden und der Komponententeil 5 formschlüssig aufgenommen werden.

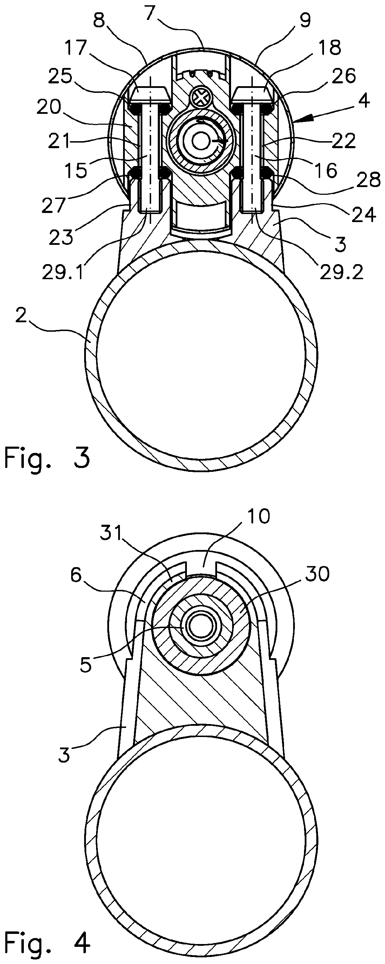

Die Fig. 3 zeigt eine Schnittdarstellung gemäß der Linie III-III der Fig. 2. Hier ist zu erkennen, dass in der Komponente 4 Befestigungsschrauben 15, 16 angeordnet sind, die jeweils ein Werkzeuganriffende 17, 18 aufweisen. Der Durchmesser der Werkzeugangriffenden 17, 18 ist größer als der Durchmesser der Zugangsöffnungen 8, 9. Die Befestigungsschrauben 15, 16 können somit nicht nach oben durch die Zugangsöffnungen 8, 9 hindurch entnommen werden.

Andererseits durchragen die Befestigungsschrauben 15, 16 einen Komponententeil 20, der Durchgangsöffnungen 21, 22 aufweist, deren Dimension, insbesondere Durchmesser, geringer ist als der Durchmesser bzw. Form oder Größe der Werkzeugangriffenden 17, 18. Somit ist es auch nicht möglich, dass die Befestigungsschrauben 15, 16 die Komponente 4 nach unten verlassen. Insbesondere können die Befestigungsschrauben 15, 16 nicht ausgetauscht werden, ohne die Komponente 4 zu zerstören.

Die Befestigungsschrauben 15, 16 sind in Gewindezapfen 23, 24 des Halters 3 eingeschraubt. Die Gewindezapfen 23, 24 ragen in die Komponente 4 hinein. Es ist zu erkennen, dass die Befestigungsschrauben 15, 16 selbst in der eingeschraubten Position mit ihrem Befestigungsende 29.1, 29.2 nicht nach unten über das Gehäuse 7 der Komponente 4 hervorstehen.

Zwischen den Werkzeugangriffenden 17, 18 und dem Komponentenabschnitt 20 sowie zwischen dem Komponentenabschnitt 20 und dem Gewindezapfen 23, 24 sind jeweils als O-Ringe aus Gummi ausgebildete Dämpfungselemente 25 bis 28 angeordnet, die die Komponente 4 von dem Halter 3 schwingungsmäßig entkoppeln.

Weiterhin ist der Fig. 3 zu entnehmen, dass der Halter 3 in seiner Form an das Fahrzeugteil 2 angepasst ist. Der Halter 3 ist mit dem Fahrzeugteil 2 verklebt.

Der Fig. 4, die eine Schnittdarstellung gemäß der Linie IV-IV der Fig. 2 darstellt, kann man entnehmen, dass zwischen dem Komponententeil 5 und dem Schenkel 6 des Halters 3 ebenfalls ein Dämpfungselement 30 in einer Durchgangsöffnung 31 angeordnet ist, welches an dieser Stelle die Komponente 4 von dem Halter 3 schwingungsmäßig entkoppelt. Ebenfalls zu erkennen ist, dass der Schenkel 6 des Halters 3 den Schlitz 10 aufweist. Beim Einführen des Komponententeils 5 in das Dämpfungselement 30 kann dieses etwas aufgeweitet werden. Gleichzeitig kann der Schenkel 6 aufgrund des Schlitzes 10 etwas aufgeweitet werden. Somit ergibt sich eine zuverlässige Halterung der Komponente 4 an dem Halter 3. Der Halter 3 ist vorzugsweise aus einem elastischen Material ausgebildet, so dass der Schenkel 6 sich etwas aufweiten kann, ohne zerstört zu werden.

## Patentansprüche

1. Halterungsanordnung (1) für eine Komponente (4) an einem Fahrzeug, insbesondere an einem Zweirad, mit einem an einem Fahrzeugteil (2) befestigbaren Halter (3), wobei die Komponente (4) ein Gehäuse (7) aufweist, in dem zumindest eine Befestigungsschraube (15, 16) angeordnet ist, wobei das Gehäuse (7) eine Zugangsöffnung (8, 9) aufweist, deren Form und/oder Querschnitt von der und/oder dem des Werkzeugangriffendes (17, 18) der Befestigungsschraube (15, 16) abweicht, derart, dass das Werkzeugangriffende (17, 18) die Zugangsöffnung (8, 9) nicht passieren kann.

2. Halterungsanordnung nach einem der vorhergehenden Ansprüche, **dadurch gekennzeichnet, dass** die Komponente (4) eine Durchgangsöffnung (21, 22) aufweist, in der die Befestigungsschraube (15, 16) angeordnet ist, wobei die Befestigungsschraube (15, 16) mit ihrem Befestigungsende (29.1, 29.2) nicht über das Gehäuse (7) nach außen übersteht.

3. Halterungsanordnung nach einem der vorhergehenden Ansprüche, **dadurch gekennzeichnet, dass** der Halter (3) zumindest einen Gewindezapfen (23, 24) aufweist, der in das Gehäuse (7) der Komponente (4) ragt.

4. Halterungsanordnung nach einem der vorhergehenden Ansprüche, **dadurch gekennzeichnet, dass** der Halter (3) irreversibel an dem Fahrzeugteil (2) befestigbar ist.

5. Halterungsanordnung nach einem der vorhergehenden Ansprüche, **dadurch gekennzeichnet, dass** zwischen der Komponente (4) und dem Halter (3) zumindest ein Dämpfungselement (25, 28, 30) vorgesehen ist.

6. Halterungsanordnung nach einem der vorhergehenden Ansprüche, **dadurch gekennzeichnet, dass** zwischen einem Komponentenabschnitt (20) und dem Gewindezapfen (23, 24) ein Dämpfungselement (27, 28) angeordnet ist.

7. Halterungsanordnung nach einem der vorhergehenden Ansprüche, **dadurch gekennzeichnet, dass** zwischen dem Werkzeugangriffende (17, 18) und einem Komponentenabschnitt (20) ein Dämpfungselement (25, 26) angeordnet ist.

8. Halterungsanordnung nach einem der vorhergehenden Ansprüche, **dadurch gekennzeichnet, dass** der Halter (3) eine Durchgangsöffnung (31) oder Aufnahme zur formschlüssigen Aufnahme eines Komponententeils (5) aufweist.

9. Halterungsanordnung nach Anspruch 8, **dadurch gekennzeichnet, dass** im Bereich der Durchgangsöffnung (31) ein Dämpfungselement (30) angeordnet ist.

10. Halterungsanordnung nach Anspruch 8 oder 9, **dadurch gekennzeichnet, dass** die Durchgangsöffnung (31) oder Aufnahme aufweitbar ist.

11. Halterungsanordnung nach einem der vorhergehenden Ansprüche, **dadurch gekennzeichnet, dass** die Komponente (4) an zumindest zwei, vorzugsweise drei, Stellen mit dem Halter (3) verbunden ist.

12. Halterungsanordnung nach einem der vorhergehenden Ansprüche, **dadurch gekennzeichnet, dass** der Halter (3) an die Kontur des Fahrzeugteils (2) angepasst ist.
